(19) Europäisches Patentamt
European Patent Office
Office européen des brevets

(11) **EP 1 760 451 A1**

(12) **EUROPEAN PATENT APPLICATION**

(43) Date of publication:
**07.03.2007 Bulletin 2007/10**

(51) Int Cl.:
*G01N 19/02* (2006.01)    *B60T 8/172* (2006.01)

(21) Application number: **05108015.8**

(22) Date of filing: **01.09.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(71) Applicants:<br>• **GM Global Technology Operations, Inc.**<br>  **Detroit, MI 48265-3000 (US)**<br>• **FUJI HEAVY INDUSTRIES, LTD.**<br>  **Shinjuku-ku,**<br>  **Tokyo160-8316 (JP)** | (72) Inventors:<br>• **Matsuno, Koji**<br>  **Fuji Heavy Industries Ltd**<br>  **160-8316, Tokyo (JP)**<br>• **Ekeström, Michael**<br>  **c/o SAAB Automobile AB**<br>  **46180 Trollhättan (SE)**<br>• **le Grand, René**<br>  **461 80 Trollhättan (SE)**<br><br>(74) Representative: **Lind, Urban Arvid Oskar et al**<br>  **AWAPATENT AB**<br>  **P.O. Box 11394**<br>  **404 28 Göteborg (SE)** |

(54) **Method and system for road surface friction coefficient estimation**

(57) The present invention relates to a method, a system and computer program product for estimating, with especially high accuracy, the road surface friction coefficient ($\mu$).

Said method comprises the steps of: continuously estimating a road surface friction coefficient ($\mu$), using an algorithm based on a dynamic model of the vehicle, determining a road surface friction coefficient range based on specific transient or static vehicle driving parameters, and reinitiating said algorithm so that the estimated road surface friction coefficient ($\mu$) is adapted to said determined road surface friction coefficient range.

Said system comprises means for performing the steps of said method.

Said computer program product comprises code for execution of the steps of said method.

*Fig. 1*

**Description**

TECHNICAL FIELD OF THE INVENTION

The present invention relates to active chassis systems and a method, a system and a computer program product for road to wheel friction estimation (RFE). More specifically, the present invention relates to a method, a system and computer program product for estimating, with especially high accuracy, the road surface friction coefficient ($\mu$).

BACKGROUND ART

While driving a vehicle, such as a passenger car, the driver may come across different road surfaces, such as asphalt, gravel road, dry, wet, ice, snow, and so on. These and other types of road surfaces are characterized by different road friction coefficients ($\mu$), affecting tire grip and vehicle stability.

E.g. for safety reasons, i.e. safety for the driver, the passengers and for other road-users, and for reasons of driving economy, comfort and performance it is of importance that the vehicle can be operated in a fashion that permits it to, at any time, quickly respond to various road surface conditions.

One way of approaching this problem is to make use of estimations of momentary road surface friction. In the prior art, different principles have been disclosed for estimating momentary road surface friction.

Firstly, there is a case of calculating a momentary road surface friction coefficient ($\mu$) based on a vehicle dynamics model.

In this first RFE model, (e.g. discussed in the Japanese published unexamined application 8-2274, (US patent no. 5,742,917)), in which the algorithm is based on parameter identification, response needs to be set low in order to stabilize the estimated $\mu$ value.

A problem with this model is that it is incapable of addressing sudden changes of road surface conditions.

Secondly, there is a case of estimating $\mu$ based on wheel speed differences, e.g. being due to driving or braking, (e.g. discussed in the Japanese published unexamined application 2003-237558). One model includes a preview camera which recognizes road conditions ahead of the vehicle and various infrastructure information.

In addition, there is a case of estimating $\mu$ based on the use of self aligning torque, (e.g. discussed in the Japanese published unexamined application 2002-12160, (US patent no. 6,556,911)).

As for the two latter RFE cases, other problems occur. To start with, the conditions being capable of estimation are limited. Besides, these methods are incapable of continuously calculating the momentary $\mu$.

Compromises that have to be made to span slippery, dry and other road conditions becomes increasingly restraining the more advanced the active chassis system is.

Evidently, there is a need for a solution with which it would be possible to mitigate the drawbacks of each of the known solutions and with which it is possible to provide more reliable estimation, with high accuracy, of the road surface friction coefficient ($\mu$), of benefit for the driver of a vehicle, the passengers and other road-users.

GENERAL DISCLOSURE OF THE INVENTION

An object of the present invention is to provide a method, a system and a computer program product for estimating, with high accuracy, the momentary road surface friction coefficient ($\mu$).

This object is basically achieved through use features from the stable, continuous calculation capability of the algorithm for calculating a momentary road surface friction coefficient ($\mu$) based on a vehicle dynamics model in combination with features from the fast, accurate response of a self aligning torque based algorithm.

According to a first aspect of the present invention, it relates to a method for estimating road surface friction between a road surface and a tire of a vehicle, said method comprising the steps of: continuously estimating a road surface friction coefficient ($\mu$), using an algorithm based on a dynamic model of the vehicle, determining a road surface friction coefficient range based on specific transient or static vehicle driving parameters, and reinitiating said algorithm so that the estimated road surface friction coefficient ($\mu$) is adapted to said determined road surface friction coefficient range.

An advantage of the solution according to the present invention is that it has a larger operation range and covers a wider span of application. The performance of those active chassis systems in which the solution is implemented is thus increased.

Another advantage is that no compromises are necessary between fast response to $\mu$ transitions and stable behavior in steady $\mu$ conditions of the estimated road surface friction coefficient.

Furthermore, it is an advantage that a $\mu$ value is output even if algorithm excitation is very low or zero.

Yet another advantage is that any other new algorithm can be included to reinitialize the algorithm.

According to an embodiment of the method according to the present invention, if the continuously estimated road surface friction coefficient ($\mu$) is higher than an upper boundary value of said road surface friction coefficient range, said algorithm is reinitiated so that said road surface friction coefficient ($\mu$) is adapted downwards.

According to another embodiment of the method according to the present invention, if the continuously estimated road surface friction coefficient ($\mu$) is lower than a lower boundary value of said road surface friction coefficient range, said algorithm is reinitiated so that said road surface friction coefficient ($\mu$) is adapted upwards.

According to a further embodiment of the method according to the present invention, said algorithm is reinitiated so that said road surface friction coefficient ($\mu$) is adapted to fall within said road surface friction coefficient range.

An advantage of the latter embodiments is that no compromise is necessary between fast response to $\mu$ transitions and stable behavior in steady $\mu$ conditions of the estimated road surface friction coefficient.

According to an embodiment of the method according to the present invention, the step of determining a road surface friction coefficient range further comprises the steps of: measuring a self aligning torque, and calculating road surface friction coefficient range based on said measured self aligning torque.

According to an embodiment of the method according to the present invention, the step of determining a road surface friction coefficient range further comprises the steps of: measuring at least one of a lateral and longitudinal vehicle acceleration, and calculating said road surface friction coefficient range based on said measured vehicle acceleration.

An advantage of the present invention is that the upper and lower limits of $\mu$-estimates can be set separately by algorithms independent of each other. This means that each algorithm can be tuned independently for maximum performance.

Furthermore, according to the present invention, a forget function may widen the calculation span for the algorithm for calculating said road surface friction coefficient ($\mu$).

According to an embodiment of the method according to the present invention, values of said specific vehicle driving parameters are dependent on at least one of internally derived circumstances and externally derived circumstances.

An advantage of this is that the estimation algorithm is operational not only during driver operation.

According to another aspect of the present invention, it relates to a system for estimating road surface friction between a road surface and a tire of a vehicle, said system comprising: means for continuously estimating a road surface friction coefficient ($\mu$), using an algorithm based on a dynamic model of the vehicle, means for determining a road surface friction coefficient range based on specific transient or static vehicle driving parameters, and means for reinitiating said algorithm so that the estimated road surface friction coefficient ($\mu$) is adapted to said determined road surface friction coefficient range.

The advantages obtained with said system correspond to those of said method for estimating road surface friction, previously discussed.

According to a preferred embodiment of the system according to the present invention, it further comprises: means for reinitiating said algorithm so that said road surface friction coefficient ($\mu$) is adapted downwards, if the continuously estimated road surface friction coefficient ($\mu$) is higher than an upper boundary value of said road surface friction coefficient range.

According to a preferred embodiment of the system according to the present invention, it further comprises: means for reinitiating said algorithm so that said road surface friction coefficient ($\mu$) is adapted upwards, if the estimated road surface friction coefficient ($\mu$) is lower than a lower boundary value of said road surface friction coefficient range.

According to a preferred embodiment of the system according to the present invention, it further comprises: means for reinitiating said algorithm so that said road surface friction coefficient ($\mu$) is adapted to fall within said road surface friction coefficient range.

According to a preferred embodiment of the system according to the present invention, it further comprises: means for measuring a self aligning torque, and means for calculating road surface friction coefficient range based on said measured self aligning torque.

According to a preferred embodiment of the system according to the present invention, it further comprises: means for measuring a self aligning torque, and means for calculating road surface friction coefficient range based on said measured self aligning torque.

According to yet another aspect of the present invention, it relates to a computer program product for estimating road surface friction between a road surface and a tire of a vehicle, said computer software comprising code for execution of the steps according to one of said methods.

The advantages obtained with said computer program product correspond to those of said method for estimating road surface friction, previously discussed.

According to a preferred embodiment of the present invention, said computer program product is stored on a computer readable medium.

For example, said computer program product may be stored on a computer readable medium such as an on-board electronic control unit (ECU).

BRIEF DESCRIPTION OF THE DRAWINGS

The features of the present invention will be more apparent upon reference to the drawings, wherein:

Fig 1 is a schematic illustration of a system for estimating road surface friction between a road surface and a tire of a vehicle, according to one embodiment of the present invention.
Fig 2 is a schematic diagram showing adaptation of the algorithm according to the first embodiment of the present invention.
Fig 3 is a schematic diagram showing adaptation of the algorithm according to the second embodiment of the present invention.

DETAILED DESCRIPTION OF PREFERRED EMBODIMENTS OF THE INVENTION

The invention will now, by way of example and for purposes of illustration only, be described further, with reference to the drawings.

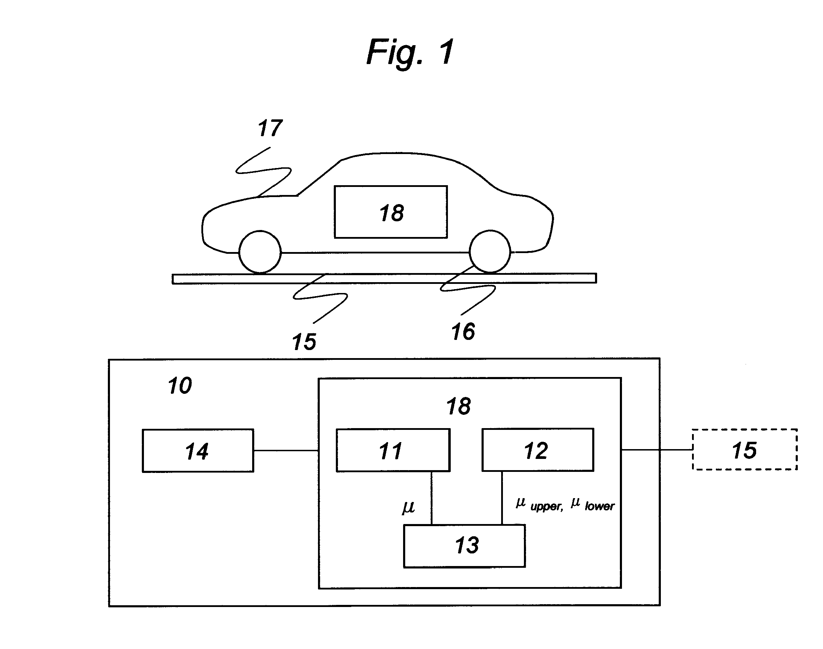

Fig 1 is a schematic illustration of a system 10 for estimating road surface friction between a road surface 15 and a tire 16 of a vehicle 17, according to one embodiment of the present invention, said system 10 comprising means 11 for continuously estimating a road surface friction coefficient ($\mu$), using an algorithm based on a dynamic model of the vehicle, means 12 for determining a road friction coefficient range based on specific transient or static driving conditions, means 13 for reinitiating said algorithm so that the estimated road surface friction coefficient ($\mu$) is adapted to said range, and sensor means 14. The means 11-13 is stored on a computer readable medium 18, such as an on-board electronic control unit (ECU), which is a control unit for a component or device of the vehicle 17, e.g., the brakes or the motor. For this reason, said computer readable medium, or ECU, comprises means corresponding to common computer means and data storage means.

The design of the algorithm described according to the present invention is to continuously use said algorithm of the means 11 for calculating a momentary road surface friction coefficient ($\mu$) based on a vehicle dynamics model, but also to use additional support algorithms of the means 12 for determining a road friction coefficient range to speed up the detection of change in $\mu$.

This means that said algorithm of the means 11 for calculating a momentary road surface friction coefficient ($\mu$) based on a vehicle dynamics model will (continuously) calculate the estimated $\mu$ in a similar way to the Japanese published unexamined application 8-2274, while said support algorithms of the means 12 will set lower and upper limit values for the estimated $\mu$.

The reference vehicle dynamics model that is used in the calculation of the means 11 is based on a bicycle model. However, any other vehicle model could be used within the present invention. The output from it is the estimated side slip angle and lateral velocity of front axle. However, it could output yaw rate/yaw error as well. It also incorporates estimations for, e.g., dynamic load shift, lateral force, and yaw error.

Instead of building an unnecessarily complicated vehicle model, the means 11 can use calculations of lateral and longitudinal load shift. Hence, dynamic load shift is a vital part of the algorithm strategy within the present invention. It allows for separation of left and right calculation of road friction estimation. The benefit of this is that the outer wheel will always show larger forces, improving the signal resolution. Besides that, the outer wheel is also the wheel that has the most influence on cornering ability.

The load shift block is designed to make a correction of the forces acting on the wheels as the vehicle corners, accelerates or brakes.

The lower and upper limit values for the momentary road surface friction coefficient ($\mu$) calculated by the means 11 are calculated through different support algorithms of the means 12, not necessarily working at the same time as the algorithm of the means 11 for calculating a momentary road surface friction coefficient ($\mu$) based on a vehicle dynamics model.

One of these support algorithms of the means 12 is a self aligning torque algorithm. This works during almost the same driving conditions as the algorithm of the means 11 for calculating a momentary road surface friction coefficient ($\mu$) based on a vehicle dynamics model, e.g. when vehicle speed is above a threshold value and the steering wheel angle is larger than a threshold value.

The algorithm of the means 12 first calculates a road surface friction coefficient ($\mu_{sat}$) based on a self aligning torque.

The calculation of self aligning torque could, as a non-limiting example, be performed as follows.

Small angle approximation is applied for the angle between the rack and the tierods. The angle between the wheelplane and tierods could be compensated for with a steering wheel angle dependant look up table outputting the effective moment arm length ($d_{TR\_wc}$), but can also be approximated to a constant value since calculation is only done on the outer wheel.

The self aligning torque can be derived as follows:

$$M_{z\_L} + M_{z\_R} = \left| p_{HPSR} - p_{HPSL} \right| A_{HPS} d_{TR\_wc} + T_{SW} \qquad (1)$$

where $d_{TR\_wc}$ is as mentioned before a function of Steering wheel angle.

The self aligning torque is also influenced by other parameters. These are steering system friction ($T_{fr}$), drive torque ($T_d$), toe ($T_{toe}$) and camber angle ($T_{camber}$) variation, caster, static toe and camber ($T_{offset}$).

Adding these to the equation (1) gives:

$$M_{z\_L} + M_{z\_R} = \left| p_{HPSR} - p_{HPSL} \right| A_{HPS} d_{TR\_wc} + T_{SWT} - T_{fr} - T_d - T_{toe} - T_{camber} - T_{Offset}$$

$$(2)$$

The caster, static toe and camber influence on tierod forces are treated as a vehicle speed dependant constant offset, as the influence of these are assumed to be minor.

From this, looking at one side of the steering system at a time (assuming that the HPS pressure on the opposed side can be neglected), Equation (2) becomes, for right turns:

$$\Rightarrow M_{z\_L} = k_L \left( p_{HPSR} A_{HPS} d_{TR\_wc} + T_{SW} - T_{fr} \right) - T_d - T_{Offset}$$

and for left turns:

$$\Rightarrow M_{z\_R} = k_R \left( p_{HPSL} A_{HPS} d_{TR\_wc} + T_{SW} - T_{fr} \right) - T_d - T_{Offset}$$

where $k_L$, $k_R$ are the side bias depending on load shift because of vehicle dynamic motion. The steering wheel torque sensor and the pressure sensors in the HPS system are filtered and centered. This has integrated functionality for correct operation of the self aligning torque calculation.

The self aligning torque based road surface friction coefficient ($\mu_{sat}$) is obtained from a look-up table depending upon the self aligning torque and a slide-angle of the front wheels.

Lower limit and upper limit values for the momentary road surface friction coefficient ($\mu$) is set according to tire grip margin. Tire grip margin is calculated as follows:

$$M_{grip} = \frac{\mu_{sat} - \dfrac{|\ddot{y}|}{g}}{\mu_{sat}}$$

wherein

$M_{grip}$=tire grip margin

$\mu_{sat}$ =$\mu$ calculated by self aligning torque

$\ddot{y}$=vehicle lateral acceleration [m/s$^2$]

g=gravity acceleration=9.8m/s$^2$

The vehicle lateral acceleration can be replaced by longitudinal acceleration or the vectrial sum (square root of sum of squares) of longitudinal and lateral acceleration.

Zero tire grip margin means full usage of road surface $\mu$. When the tire grip margin is small, the estimating accuracy is estimated to be high and the means 12 sets an error range between the lower and upper limit values around the self aligning torque based road surface friction coefficient ($\mu_{sat}$) narrow. When the tire grip margin is large, the means 12 sets the error range wide. This error range is provided to the means 13 so that the means 13 integrates the road surface friction coefficient ($\mu$) calculated by the means 11 with the error range set by the means 12 and reinitiates the calculation of the road surface friction coefficient ($\mu$) based on a vehicle dynamics model from a lower or upper limit value of said error range.

Since the authority or reliability of the self aligning torque based road surface friction coefficient ($\mu_{sat}$) drops rapidly, a forget function is applied to the lower and upper limit values to gradually widens the error range, that is, calculation span for the algorithm for calculating a momentary road surface friction coefficient ($\mu$) based on a vehicle dynamics model.

Alternatively, as the second embodiment of the present invention, the means 12 can set lower and upper limit values for the road surface friction coefficient ($\mu$) individually according to the tire grip margin, instead of setting lower and upper limit values in pair in the form of error range. As an example, in the event that the tire grip margin is smaller than a predetermined value, an upper limit value ($\mu_{upper}$) is set as follows:

$$\mu_{upper} \;=\; \mu_{sat} \;/\; 1-M_{grip}$$

Similarly, in the event that the tire grip margin is larger than a predetermined value, a lower limit value ($\mu_{lower}$) is set as follows:

$$\mu_{lower} \;=\; |\ddot{y}| \;/\; g$$

A forget function is applied to the lower or upper limit value to gradually widens the calculation span for the algorithm for calculating a momentary road surface friction coefficient ($\mu$) based on a vehicle dynamics model.

Accordingly, as stated before, the basic idea of the invention is to use the continuous calculation capability of the algorithm for calculating a momentary road surface friction coefficient ($\mu$) based on a vehicle dynamics model in combination with the fast response of a self aligning torque based algorithm. Said lower and upper limit values described earlier are used to rapidly force the algorithm for calculating a momentary road surface friction coefficient ($\mu$) based on a vehicle dynamics model to a new value, resetting it and allowing it to calculate from this new point.

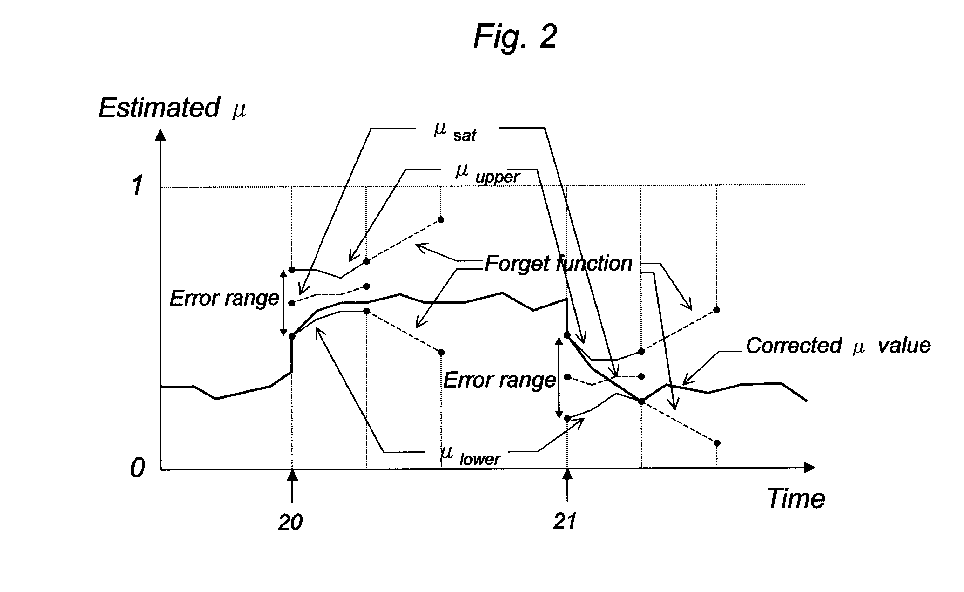

Fig 2 is a schematic diagram showing operation of the system 10 according to the first embodiment of the present invention. It is assumed that at time points 20 and 21, the actual road surface condition suddenly change. Although the road surface friction coefficient ($\mu$) calculated by the means 11 is unable to respond to such sudden changes of road surface conditions, it is adapted downwards at the time point 20 by means of an upper limit value of the error range set by the means 12 depending upon the self aligning torque based algorithm. Thereafter, the means 11 continues calculation of the road surface friction coefficient ($\mu$) from the upper limit value. On the other hand, at the time point 21, the road surface friction coefficient ($\mu$) is adapted upwards by means of a lower limit value of the error range set by the means 12 and then the calculation of the road surface friction coefficient ($\mu$) is reinitiated from the lower limit value.

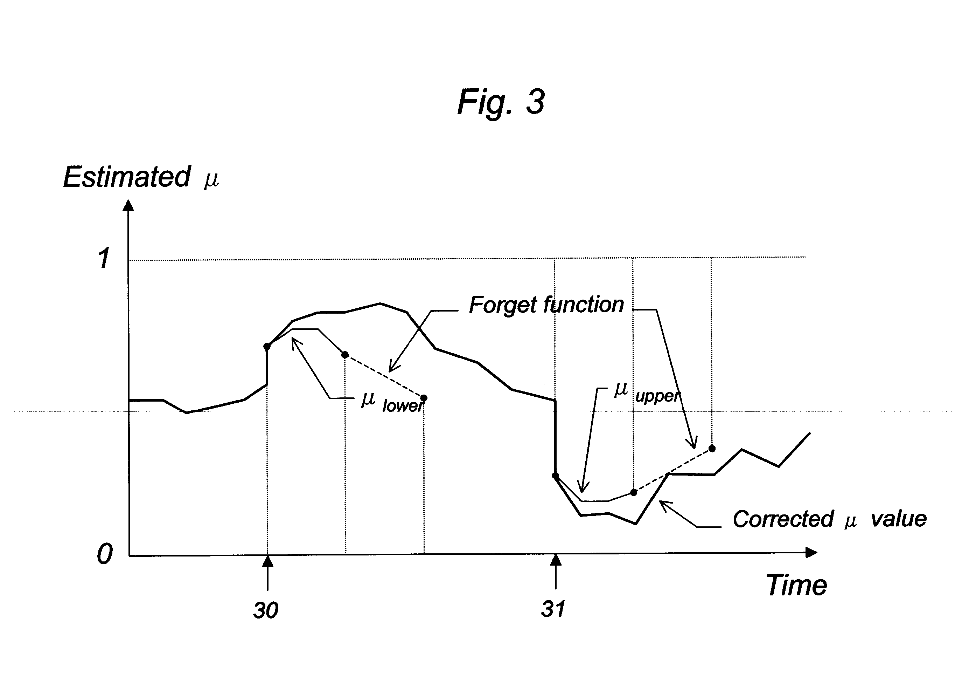

Fig 3 is a schematic diagram showing operation of the system 10 according to the second embodiment of the present invention. It is assumed that at time points 30 and 31, the actual road surface conditions suddenly change. The road surface friction coefficient ($\mu$) calculated by the means 11 is adapted downwards at the time point 30 by means of an upper limit value calculated by the means 12 depending upon the self aligning torque based algorithm. On the other hand, at the time point 31, the road surface friction coefficient ($\mu$) is adapted upwards by means of a lower limit value calculated by the means 12 depending upon the self aligning torque based algorithm.

It should be pointed out that the present invention is not limited to the realizations described above. The foregoing discussion merely describes exemplary embodiments of the present invention. The skilled man will readily recognize that various changes and modifications may be made without departing from the spirit of the invention, as defined in the claims.

For example, such modifications that are included within the scope of the present invention include the integration of any other type of algorithm especially designed for certain driving or road conditions performing better than the self aligning torque based or acceleration or deceleration algorithms.

## Claims

1.    A method for estimating road surface friction between a road surface and a tire of a vehicle, comprising the steps of:

   - continuously estimating a road surface friction coefficient ($\mu$), using an algorithm based on a dynamic model of the vehicle,

- determining a road surface friction coefficient range based on specific transient or static vehicle driving parameters, and
- reinitiating said algorithm so that the estimated road surface friction coefficient ($\mu$) is adapted to said determined road surface friction coefficient range.

2. A method according to claim 1, wherein if the continuously estimated road surface friction coefficient ($\mu$) is higher than an upper boundary value of said road surface friction coefficient range, said algorithm is reinitiated so that said road surface friction coefficient ($\mu$) is adapted downwards.

3. A method according to claim 1, wherein if the continuously estimated road surface friction coefficient ($\mu$) is lower than a lower boundary value of said road surface friction coefficient range, said algorithm is reinitiated so that said road surface friction coefficient ($\mu$) is adapted upwards.

4. A method according to claim 1, wherein said algorithm is reinitiated so that said road surface friction coefficient ($\mu$) is adapted to fall within said road surface friction coefficient range.

5. A method according to any one of the preceding claims, wherein the step of determining a road surface friction coefficient range further comprises the steps of:

   - measuring a self aligning torque, and
   - calculating road surface friction coefficient range based on said measured self aligning torque.

6. A method according to any one of the preceding claims, wherein the step of determining a road surface friction coefficient range further comprises the steps of:

   - measuring at least one of a lateral and longitudinal vehicle acceleration, and
   - calculating said road surface friction coefficient range based on said measured vehicle acceleration.

7. A method according to any one of the preceding claims, wherein values of said specific vehicle driving parameters are dependent on at least one of internally derived circumstances and externally derived circumstances.

8. A system for estimating road surface friction between a road surface and a tire of a vehicle, said system comprising:

   - means for continuously estimating a road surface friction coefficient ($\mu$), using an algorithm based on a dynamic model of the vehicle,
   - means for determining a road surface friction coefficient range based on specific transient or static vehicle driving parameters, and
   - means for reinitiating said algorithm so that the estimated road surface friction coefficient ($\mu$) is adapted to said determined road surface friction coefficient range.

9. A system according to claim 8, further comprising:

   - if the continuously estimated road surface friction coefficient ($\mu$) is higher than an upper boundary value of said road surface friction coefficient range, means for reinitiating said algorithm so that said road surface friction coefficient ($\mu$) is adapted downwards.

10. A system according to claim 8, further comprising:

   - if the estimated road surface friction coefficient ($\mu$) is lower than a lower boundary value of said road surface friction coefficient range, means for reinitiating said algorithm so that said road surface friction coefficient ($\mu$) is adapted upwards.

11. A system according to claim 8, further comprising:

   - means for reinitiating said algorithm so that said road surface friction coefficient ($\mu$) is adapted to fall within said road surface friction coefficient range.

12. A system according to any one of claims 8 to 11, further comprising:

- means for measuring a self aligning torque, and
- means for calculating road surface friction coefficient range based on said measured self aligning torque.

**13.** A system according to any one of claims 8 to 12, further comprising:

- means for measuring at least one of a lateral and longitudinal vehicle acceleration, and
- means for calculating said road surface friction coefficient range based on said measured vehicle acceleration.

**14.** Computer program product for estimating road surface friction between a road surface and a tire of a vehicle, comprising code for execution of the steps according to one of claims 1 to 7.

**15.** Computer program product according to claim 14, stored on a computer readable medium.

**16.** Computer program product according to claim 14 or 15, wherein said computer readable medium is an electronic control unit (ECU).

Fig. 1

18

17

16

15

10

11

12

13

14

15

18

$\mu$

$\mu_{upper}$, $\mu_{lower}$

Fig. 2

EP 1 760 451 A1

Fig. 3

European Patent
Office

**EUROPEAN SEARCH REPORT**

Application Number

EP 05 10 8015

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 207 089 A (FUJI JUKOGYO KABUSHIKI KAISHA) 22 May 2002 (2002-05-22) | 1-4, 7-11, 14-16 | B60T8/172 G01N19/02 |
| Y | * paragraphs [0032] - [0042] * | 5,6,12, 13 | |
| Y | US 2005/065699 A1 (BERTRAND DAVID) 24 March 2005 (2005-03-24) * abstract * | 5,12 | |
| Y | DE 102 08 815 A1 (CONTINENTAL TEVES AG & CO. OHG) 18 September 2003 (2003-09-18) * claim 1 * | 6,13 | |
| A | EP 1 407 950 A (AISIN SEIKI KABUSHIKI KAISHA; TOYODA KOKI KABUSHIKI KAISHA; ADVICS CO.) 14 April 2004 (2004-04-14) * claims 1-5 * | 5,12 | |
| A | US 2005/004738 A1 (GRONAU RALPH ET AL) 6 January 2005 (2005-01-06) * paragraphs [0050] - [0055] * | 1,8,14 | TECHNICAL FIELDS SEARCHED (IPC) B60T G01N |

The present search report has been drawn up for all claims

| Place of search | Date of completion of the search | Examiner |
|---|---|---|
| Munich | 27 January 2006 | Colonna, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 760 451 A1**

## ANNEX TO THE EUROPEAN SEARCH REPORT
## ON EUROPEAN PATENT APPLICATION NO.

EP 05 10 8015

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2006

| Patent document cited in search report | | Publication date | Patent family member(s) | | Publication date |
|---|---|---|---|---|---|
| EP 1207089 | A | 22-05-2002 | JP | 3539722 B2 | 07-07-2004 |
| | | | JP | 2002145037 A | 22-05-2002 |
| | | | US | 2002087251 A1 | 04-07-2002 |
| US 2005065699 | A1 | 24-03-2005 | AU | 2003208805 A1 | 02-09-2003 |
| | | | WO | 03066400 A1 | 14-08-2003 |
| | | | EP | 1476339 A1 | 17-11-2004 |
| | | | FR | 2835919 A1 | 15-08-2003 |
| | | | JP | 2005516836 T | 09-06-2005 |
| DE 10208815 | A1 | 18-09-2003 | WO | 03074337 A1 | 12-09-2003 |
| | | | EP | 1483143 A1 | 08-12-2004 |
| | | | JP | 2005518987 T | 30-06-2005 |
| | | | US | 2005234628 A1 | 20-10-2005 |
| EP 1407950 | A | 14-04-2004 | DE | 60300375 D1 | 14-04-2005 |
| | | | JP | 2004130964 A | 30-04-2004 |
| | | | US | 2004148077 A1 | 29-07-2004 |
| US 2005004738 | A1 | 06-01-2005 | DE | 10130663 A1 | 23-01-2003 |
| | | | WO | 03002392 A1 | 09-01-2003 |
| | | | EP | 1404553 A1 | 07-04-2004 |
| | | | JP | 2004530598 T | 07-10-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8002274 A
- US 5742917 A
- JP 2003237558 A
- JP 2002012160 A
- US 6556911 B